# EUROPEAN PATENT APPLICATION

(11) **EP 4 542 915 A2**
(43) Date of publication of application: **23.04.2025**
(21) Application number: 25161682.7
(22) Date of filing: 07.07.2017
(51) Int. Cl.: H04L 5/00

(54) **METHOD AND DEVICE FOR DATA TRANSMISSION**

(30) Priority: 14.07.2016 CN 201610557106
(62) Divisional of application: 17826942.9
(71) Applicant: ZTE Corporation, Shenzhen, Guangdong 518057 (CN)
(72) Inventor: DAI, Bo, Nanshan, Shenzhen, 518057 (CN); XIE, Feng, Nanshan, Shenzhen, 518057 (CN); LIU, Kun, Nanshan, Shenzhen, 518057 (CN); YUAN, Zhifeng, Nanshan, Shenzhen, 518057 (CN)
(74) Representative: Aipex B.V.

(57) **Abstract**

The present invention provides a method and device for data transmission. The method for data transmission includes: transmitting, by a first transmission node, data on n orthogonal frequency-division multiplexing (OFDM) symbols, where the data includes more than 1 bit, the data is encoded and then mapped onto the n OFDM symbols, n is an integer greater than 1, a first OFDM symbol of the n OFDM symbols is provided with a first cyclic prefix (CP), OFDM symbols other than the first OFDM symbol of the n OFDM symbols are provided with no CP or respective second CPs, and a length of the first CP is greater than or equal to a length of each second CP of the second CPs.

## Description

### TECHNICAL FIELD

The present application relates to, but is not limited to, wireless communication and, in particular, relates to a method and device for data transmission.

### BACKGROUND

In the existing long term evolution (LTE) system, user equipment (UE), before transmitting a data packet, needs to perform uplink synchronization. The uplink synchronization includes the following four steps. In the first step, the UE transmits a Physical Random Access Channel (PRACH). In the second step, a base station obtains the amount of timing adjustment according to the PRACH transmitted by the UE, and transmits timing adjustment information and scheduling information used by the UE for transmitting uplink data to target UE. In the third step, the target UE transmits a message 3 (Msg3) to the base station according to the timing adjustment information and the scheduling information for transmitting the uplink data transmitted by the base station, where the Msg3 includes information such as a connection request and a user identifier. In the fourth step, the base station feeds back a message 4 (Msg4) according to the received connection request message and the user identifier message where the Msg4 includes the user identifier and a response to the connection request. The PRACH is a specific sequence. The UE randomly selects and transmits a PRACH in a resource pool, which is configured by the base station. There is a case in which two pieces of UE select the same PRACH, In this case, the base station cannot identify these two pieces of UE when detecting the PRACH. The aim of the UE transmitting the user identifier in the third step and the base station transmitting the received user identifier in the fourth step is to allow the user to identify whether the user accesses the network successfully or not. If the user fails to receive the user identifier fed back from the base station, it is determined that the user fails to access the network. Generally, the identifier is a globally unique identifier (GUID) of a length of 40 bits of the user. The UE needs to perform the synchronization before transmitting the data packet, that is, such an access process needs to be performed even if the data packet is small, resulting in data transmission delay and increasing unnecessary overhead of the system, thereby affecting usage efficiency of system resources.

### SUMMARY

The following is a summary of the subject matter described herein in detail. This summary is not intended to limit the scope of the claims.

Embodiments of the present invention provide a method and device for data transmission. The method and device for data transmission may transmit the data more quickly, reduce delay, and increase usage efficiency of system resources, and at the same time, minimize the impact on data transmission of other users in an asynchronous scenario.

The method for data transmission provided in an embodiment of the present invention includes:
transmitting, by a first transmission node, data on n orthogonal frequency-division multiplexing (OFDM) symbols, where the data includes more than 1 bit, the data is encoded and then mapped onto the n OFDM symbols, and n is an integer greater than 1.

A first OFDM symbol of the n OFDM symbols is provided with a first cyclic prefix (CP). OFDM symbols other than the first OFDM symbol of the n OFDM symbols are provided with no CP or respective second CPs. The length of the first CP is greater than or equal to the length of each second CP of the second CPs.

In an exemplary embodiment, the length of the first CP may be greater than time domain asynchronous offset of the first transmission node.

In an exemplary embodiment, when the first OFDM symbol is provided with the first CP and the OFDM symbols other than the first OFDM symbol are provided with the second CPs, a position relationship of the second CPs may include:
different types of second CPs are spaced by the first CP;
different types of second CPs are adjacent, the first CP is disposed on the first OFDM symbol, and the different types of second CPs are consecutive without interlacing; or
different types of second CPs are adjacent, the first CP is disposed on the first OFDM symbol, and the different types of second CPs interlace with each other.

In an exemplary embodiment, a guard period (GP) may be further added after the n OFDM symbols.

In an exemplary embodiment, a total time domain length of the first CP, the second CPs, the n OFDM symbols and the GP may be 2^{m} ms, where a time domain length of the GP is greater than or equal to 0, and m is an integer.

In an exemplary embodiment, a time domain position corresponding to the n OFDM symbols may be configured by a base station through signaling.

In an exemplary embodiment, a value of n may be determined in one of following manners: predefinition, configuration through a base station, and determination according to a predefined parameter, where the predefined parameter includes at least one of: a data transport block size, a data type, a system bandwidth, a coverage level corresponding to the data, a number of repetitions corresponding to the data, and subcarrier spacing.

In an exemplary embodiment, when the first transmission node transmits the data on the n OFDM symbols, a frequency domain bandwidth for transmitting the data may be determined in one of following manners: predefinition, configuration through a base station, and determination according to the predefined parameter, where the predefined parameter includes at least one of: a data transport block size, a data type, a system bandwidth, a coverage level corresponding to the data, a number of repetitions corresponding to the data, and subcarrier spacing.

In an exemplary embodiment, when the each second CP has a length greater than a first threshold, the length of the first CP may be equal to the length of the each second CP; and when the each second CP has a length less than the first threshold, the length of the first CP may be greater than the length of the each second CP.

In an exemplary embodiment, in initial access to a network, the data may include at least one of: an identifier specific to and carried by the first transmission node, a connection establishment request message, and a service data packet; and in transmission of the data after the access to the network, the data may include at least one of: an identifier allocated by a second transmission node to the first transmission node, a service data packet, and a short security information packet allocated by the second transmission node.

In an exemplary embodiment, at least one of a retransmission manner of the data, a transmission manner of next new data and a feedback manner corresponding to the data may be determined at least according to a buffer scheduling request (BSR), a data type, a data transport block size, duration of the data, and a bandwidth of the data.

In an exemplary embodiment, the determination of at least one of the retransmission manner of the data, the transmission manner of the next new data and the feedback manner corresponding to the data according to the BSR, the data type, the data transport block size, the duration of the data, and the bandwidth of the data may include at least one of:
a value S of the BSR greater than a threshold S1 corresponds to a following transmission manner: subsequent data is transmitted based on scheduling of the second transmission node;
the value S of the BSR less than a threshold S2 corresponds to a following feedback manner: the second transmission node feeds back only at least one of an acknowledgement/non-acknowledgement (ACK/NACK) message and random identifier information, where the random identifier information is randomly generated by the second transmission node according to the identifier reported by the first transmission node, or is randomly generated by the first transmission node and carried in the data transmitted to the second transmission node;
a value A of the duration of the data greater than a threshold A1 corresponds to a following transmission manner: the subsequent data is transmitted based on the scheduling of the second transmission node;
the value A of the duration of the data less than a threshold A2 corresponds to a following feedback manner: the second transmission node feeds back only at least one of the ACK/NACK message and the random identifier information, where the random identifier information is randomly generated by the second transmission node according to the identifier reported by the first transmission node, or is randomly generated by the first transmission node and carried in the data transmitted to the second transmission node;
a value B of the bandwidth of the data greater than a threshold B1 corresponds to a following transmission manner: the subsequent data is transmitted based on the scheduling of the second transmission node;
the value B of the bandwidth of the data less than a threshold B2 corresponds to a following feedback manner: the second transmission node feeds back only at least one of the ACK/NACK message and the random identifier information, where the random identifier information is randomly generated by the second transmission node according to the identifier reported by the first transmission node, or is randomly generated by the first transmission node and carried in the data transmitted to the second transmission node;
the data type being a first type corresponds to a following transmission manner: the subsequent data is transmitted based on the scheduling of the second transmission node; and
the data type being a second type corresponds to a following feedback manner: the second transmission node feeds back only at least one of the ACK/NACK message and the random identifier information, where the random identifier information is randomly generated by the second transmission node according to the identifier reported by the first transmission node, or is randomly generated by the first transmission node and carried in the data transmitted to the second transmission node.

In an exemplary embodiment, the method may further include:
determining, by the first transmission node, whether to retransmit the data according to at least one of the ACK/NACK message and the random identifier information.

In an exemplary embodiment, the method may further include:
when the first transmission node only obtains the NACK message, randomly selecting, by the first transmission node, a resource again to retransmit the data.

**In** an exemplary embodiment, the method may further include:
when the first transmission node obtains a timing advance (TA), randomly selecting, by the first transmission node, a second resource from a second resource set to transmit retransmission data or new data, where the second resource set is a set of a plurality of the second resources configured by the base station for transmitting the data, the second resource is a basic unit for transmitting the data, a frequency domain bandwidth and a time domain length of the second resource are predefined, and the second resources has a same structure as a resource for transmitting the data based on the scheduling of the second transmission node.

**In** an exemplary embodiment, the method may further include:
when the first transmission node obtains the TA and a UL grant or only the UL grant, transmitting, by the first transmission node, the retransmission data or the new data on a resource indicated by the UL grant.

In an exemplary embodiment, the method may further include:
when the first transmission node obtains a random identifier consistent with a target random identifier, determining, by the first transmission node, that the data is transmitted successfully; and
when the first transmission node obtains a random identifier inconsistent with the target random identifier, randomly selecting, by the first transmission node, a resource again to retransmit the data.

In an exemplary embodiment, the first transmission node may determine a transmission manner according to at least one of configuration information, a predefined rule, and capability information of the first transmission node in a current system, where the predefined rule includes selection of the transmission manner by the first transmission node according to at least one of a size of transmission data or a size of the BSR, a time domain transmission unit corresponding to the transmission data, retransmission corresponding to the transmission data, and system-configured dedicated information.

In an exemplary embodiment, the data is transmitted in at least one of the following manners:
the first transmission node configures non-scheduled transmission according to the second transmission node, and retransmits the data or transmits the new data in a non-scheduled mode according to the ACK/NACK message fed back by the second transmission node;
the first transmission node configures the non-scheduled transmission according to the second transmission node, and retransmits the data or transmits the new data in the non-scheduled mode according to the ACK/NACK message and a TA fed back by the second transmission node, where the first transmission node performs adjustment according to the TA fed back by the second transmission node and retransmits the data or transmits the new data;
the first transmission node configures the non-scheduled transmission according to the second transmission node, and retransmits the data or transmits the new data based on the scheduling according to a UL grant and the TA fed back by the second transmission node; and
the first transmission node configures the non-scheduled transmission according to the second transmission node, and retransmits the data or transmits the new data according to the UL grant fed back by the second transmission node.

The device for data transmission provided in an embodiment of the present invention includes a transmitting unit.

The transmitting unit is configured to transmit data on n OFDM symbols, where the data includes more than 1 bit, the data is encoded and then mapped onto the n OFDM symbols, n is an integer greater than 1.

A first OFDM symbol of the n OFDM symbols is provided with a first CP. OFDM symbols other than the first OFDM symbol of the n OFDM symbols are provided with no CP or respective second CPs. The length of the first CP is greater than or equal to the length of each second CP of the second CPs.

In an exemplary embodiment, the length of the first CP may be greater than time domain asynchronous offset of the first transmission node.

In an exemplary embodiment, when the first OFDM symbol is provided with the first CP and the OFDM symbols other than the first OFDM symbol are provided with the second CPs, a position relationship of the second CPs may include:
different types of second CPs are spaced by the first CP;
different types of second CPs are adjacent, the first CP is disposed on the first OFDM symbol, and the different types of second CPs are consecutive without interlacing; or
different types of second CPs are adjacent, the first CP is disposed on the first OFDM symbol, and the different types of second CPs interlace with each other.

In an exemplary embodiment, a GP may be further added after the n OFDM symbols.

In an exemplary embodiment, a total time domain length of the first CP, the second CPs, the n OFDM symbols and the GP may be 2^{m} ms, where a time domain length of the GP is greater than or equal to 0, and m is an integer.

In an exemplary embodiment, a time domain position corresponding to the n OFDM symbols may be configured by a base station through signaling.

In an exemplary embodiment, a value of n may be determined based on one of following manners: predefinition, configuration through a base station, and determination according to a predefined parameter, where the predefined parameter includes at least one of: a data transport block size, a data type, a system bandwidth, a coverage level corresponding to the data, a number of repetitions corresponding to the data, and subcarrier spacing.

In an exemplary embodiment, when the data is transmitted on the n OFDM symbols, a frequency domain bandwidth for transmitting the data may be determined in one of following manners: predefinition, configuration through a base station, and determination according to the predefined parameter, where the predefined parameter includes at least one of: a data transport block size, a data type, a system bandwidth, a coverage level corresponding to the data, a number of repetitions corresponding to the data, and subcarrier spacing.

In an exemplary embodiment, when the each second CP has a length greater than a first threshold, the length of the first CP may be equal to the length of the each second CP; and when the each second CP has a length less than the first threshold, the length of the first CP may be greater than the length of the each second CP.

In an exemplary embodiment, in initial access to a network, the data may include at least one of: an identifier specific to and carried by the first transmission node, a connection establishment request message, and a service data packet; and in transmission of the data after the access to the network, the data may include at least one of: an identifier allocated by a second transmission node to the first transmission node, a service data packet, and a short security information packet allocated by the second transmission node.

In an exemplary embodiment, at least one of a retransmission manner of the data, a transmission manner of next new data and a feedback manner corresponding to the data may be determined at least according to a BSR, a data type, a data transport block size, duration of the data, and a bandwidth of the data.

In an exemplary embodiment, the determination of at least one of the retransmission manner of the data, the transmission manner of the next new data and the feedback manner corresponding to the data according to the BSR, the data type, the data transport block size, the duration of the data, and the bandwidth of the data may include at least one of:
a value S of the BSR greater than a threshold S1 corresponds to a following transmission manner: subsequent data is transmitted based on scheduling of the second transmission node;
the value S of the BSR less than a threshold S2 corresponds to a following feedback manner: the second transmission node feeds back only at least one of an ACK/NACK message and random identifier information, where the random identifier information is randomly generated by the second transmission node according to the identifier reported by the first transmission node, or is randomly generated by the first transmission node and carried in the data transmitted to the second transmission node;
a value A of the duration of the data greater than a threshold A1 corresponds to a following transmission manner: the subsequent data is transmitted based on the scheduling of the second transmission node;
the value A of the duration of the data less than a threshold A2 corresponds to a following feedback manner: the second transmission node feeds back only at least one of the ACK/NACK message and the random identifier information, where the random identifier information is randomly generated by the second transmission node according to the identifier reported by the first transmission node, or is randomly generated by the first transmission node and carried in the data transmitted to the second transmission node;
a value B of the bandwidth of the data greater than a threshold B1 corresponds to a following transmission manner: the subsequent data is transmitted based on the scheduling of the second transmission node;
the value B of the bandwidth of the data less than a threshold B2 corresponds to a following feedback manner: the second transmission node feeds back only at least one of the ACK/NACK message and the random identifier information, where the random identifier information is randomly generated by the second transmission node according to the identifier reported by the first transmission node, or is randomly generated by the first transmission node and carried in the data transmitted to the second transmission node;
the data type being a first type corresponds to a following transmission manner: the subsequent data is transmitted based on the scheduling of the second transmission node; and
the data type being a second type corresponds to a following feedback manner: the second transmission node feeds back only at least one of the ACK/NACK message and the random identifier information, where the random identifier information is randomly generated by the second transmission node according to the identifier reported by the first transmission node, or is randomly generated by the first transmission node and carried in the data transmitted to the second transmission node.

In an exemplary embodiment, the device may further include a processing unit. The processing unit is configured to determine whether to retransmit the data according to at least one of the ACK/NACK message and the random identifier information.

In an exemplary embodiment, the transmitting unit may be further configured to, when the first transmission node only obtains the NACK message, randomly select a resource again to retransmit the data. In an exemplary embodiment, the transmitting unit may be further configured to, when the first transmission node obtains a TA, randomly select a second resource from a second resource set to transmit retransmission data or new data, where the second resource set is a set of a plurality of the second resources configured by the base station for transmitting the data, the second resource is a basic unit for transmitting the data, a frequency domain bandwidth and a time domain length of the second resource are predefined, and the second resource has a same structure as a resource for transmitting the data based on the scheduling of the second transmission node.

In an exemplary embodiment, the transmitting unit may be further configured to, when the first transmission node obtains the TA and a UL grant or only the UL grant, transmit the retransmission data or the new data on a resource indicated by the UL grant.

In an exemplary embodiment, the processing unit may be further configured to:
when the first transmission node obtains a random identifier consistent with a target random identifier, determine that the data is transmitted successfully; and
when the first transmission node obtains a random identifier inconsistent with the target random identifier, randomly select a resource again to retransmit the data.

In an exemplary embodiment, the transmitting unit may be further configured to determine a transmission manner according to at least one of configuration information, a predefined rule, and capability information of the first transmission node in a current system, where the predefined rule includes selection of the transmission manner by the first transmission node according to at least one of a size of transmission data or a size of the BSR, a time domain transmission unit corresponding to the transmission data, retransmission corresponding to the transmission data, and system-configured dedicated information.

In an exemplary embodiment, the data is transmitted in at least one of the following manners: the first transmission node configures non-scheduled transmission according to the second transmission node, and retransmits the data or transmits the new data in a non-scheduled mode according to the ACK/NACK message fed back by the second transmission node;
the first transmission node configures the non-scheduled transmission according to the second transmission node, and retransmits the data or transmits the new data in the non-scheduled mode according to the ACK/NACK message and the TA fed back by the second transmission node, where the first transmission node performs adjustment according to the TA fed back by the second transmission node and retransmits the data or transmits the new data;
the first transmission node configures the non-scheduled transmission according to the second transmission node, and retransmits the data or transmits the new data based on the scheduling according to a UL grant and the TA fed back by the second transmission node; and
the first transmission node configures the non-scheduled transmission according to the second transmission node, and retransmits the data or transmits the new data according to the UL grant fed back by the second transmission node.

In addition, an embodiment of the present application further provides a computer-readable medium, which is configured to store data transmission programs. The data transmission programs, when executed by a processor, implement the steps of the method for data transmission described above.

In the technical solution of the present invention, data is transmitted on n OFDM symbols. The data includes more than 1 bit, the data is encoded and then mapped onto the n OFDM symbols, and n is an integer greater than 1. A first OFDM symbol of the n OFDM symbols is provided with a first CP, OFDM symbols other than the first OFDM symbol of the n OFDM symbols are provided with respective second CPs, and the length of the first CP is greater than or equal to the length of each second CP of the second CPs. In this way, the data may be transmitted more quickly, the delay may be reduced, and the usage efficiency of system resources may be increased. At the same time, the impact on data transmission of other users in an asynchronous scenario may be minimized.

Other aspects can be understood after reading and understanding the drawings and detailed description.

### BRIEF DESCRIPTION OF DRAWINGS

FIG. 1 is a structural diagram 1 of a data transmission channel according to an embodiment of the present invention;
FIG. 2 is a structural diagram 2 of a data transmission channel according to an embodiment of the present invention;
FIG. 3 is a structural diagram 3 of a data transmission channel according to an embodiment of the present invention;
FIG. 4 is a structural diagram 4 of a data transmission channel according to an embodiment of the present invention;
FIG. 5 is a structural diagram 5 of a data transmission channel according to an embodiment of the present invention;
FIG. 6 is a flowchart of a method for data transmission according to an embodiment of the present invention; and
FIG. 7 is a structural diagram of a device for data transmission according to an embodiment of the present invention.

### DETAILED DESCRIPTION

Implementation of the embodiments of the present invention is described below in detail with reference to the drawings. The drawings are illustrative and are not intended to limit the embodiments of the present invention.

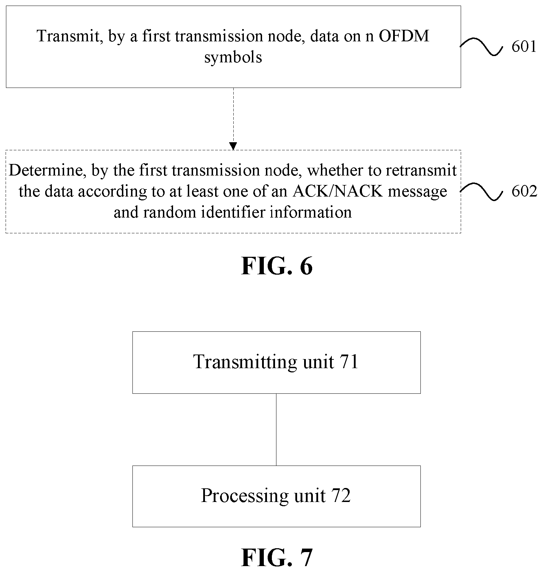

FIG. 6 is a flowchart of a method for data transmission according to an embodiment of the present invention. As shown in FIG. 6, the method for data transmission includes step 601 described below.

In step 601, a first transmission node transmits data on n OFDM symbols. The data includes more than 1 bit, the data is encoded and then mapped onto the n OFDM symbols, and n is an integer greater than 1. A first OFDM symbol of the n OFDM symbols is provided with a first CP, and OFDM symbols other than the first OFDM symbol of the n OFDM symbols are provided with respective second CPs. The length of the first CP is greater than or equal to the length of each second CP of the second CPs.

The first transmission node here may be a terminal, a base station, a relay or other node devices. In this embodiment, the length of the first CP may be greater than time domain asynchronous offset of the first transmission node.

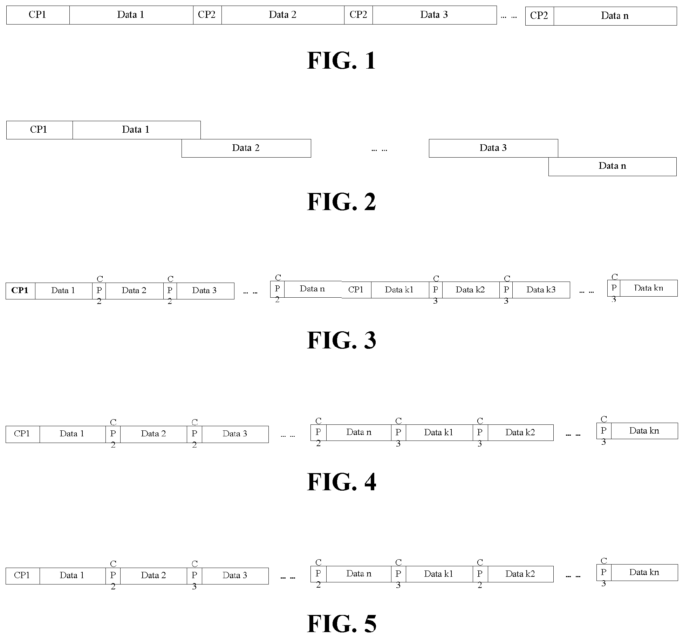

In an example, each of the n OFDM symbols is provided with a CP, the length of the first CP (CP1) of the first OFDM symbol is greater than the length of each second CP (CP2) of the respective one of the other OFDM symbols, and of the second CPs of the other OFDM symbols have the same time domain length. As shown in FIG. 1, the long CP1 is mainly used to address the interference on the data transmission of other users in the time domain in an asynchronous scenario, and the CPs of the other OFDM symbols are mainly used to solve the interference between the other OFDM symbols caused by multipath delay. In another example, only the first OFDM symbol is provided with a CP, and the other OFDM symbols are provided with no CP. As shown in FIG. 2, the long CP1 is mainly used to address the interference on the data transmission of other users in the time domain in the asynchronous scenario, and the interference between the other OFDM symbols caused by multipath delay is addressed by new waveform modulation, such as FB-OFDM.

In addition, except the CP1 of the first OFDM symbol, the other OFDM symbols may be provided with one or more types of CPs. Each of the CPs of the other OFDM symbols has a length less than the CP1 of the first OFDM symbol. As shown in FIG. 3, the CPs may be of 3 types, or may be of 4, 5 or more types.

In this embodiment, when the first OFDM symbol is provided with the first CP and the OFDM symbols other than the first OFDM symbol are provided with the second CPs, one or more CPs, except the first CP, may have one of following position relationships.

In a first position relationship, different types of CPs are spaced by the first CP. As shown in FIG. 3, CP2s and CP3s are spaced by the CP1.

In a second position relationship, different types of CPs are adjacent, the first CP is disposed on the first OFDM symbol, and the different types of second CPs are consecutive without interlacing. As shown in FIG. 4, CP2s and CP3s are disposed consecutively without interlacing. In a third position relationship, different types of CPs are adjacent, the first CP is disposed on the first OFDM symbol, and the different types of second CPs interlace with each other. As shown in FIG. 5, CP2s and CP3s interlace with each other.

In this embodiment, a guard period (GP) may be further added after the n OFDM symbols.

In this embodiment, the total time domain length of the first CP, the second CPs, the n OFDM symbols and the GP is 2^{m} ms, where the time domain length of the GP is greater than or equal to 0, and m is an integer such as -4, -3, -2, -1, 0, 1, 2, 3, 4, 8, and 16.

For example, the number n of the OFDM symbols is 7, the length of a long CP is 5.2 us, the length of a short CP is 4.7 us, and m is -1. Alternatively, the number n of the OFDM symbols is 14, the length of the long CP is 5.7 us, the length of the short CP is 4.7 us, and m is 0. Alternatively, the number n of the OFDM symbols is 56, the length of the long CP is 8.7 us, the length of the short CP is 4.7 us, and m is 2. Alternatively, the number n of the OFDM symbols is 112, the length of the long CP is 12.7 us, the length of the short CP is 4.7 us, and m is 3. Alternatively, the number n of the OFDM symbols is 13, the length of the long CP is 39.25 us, the length of the short CP is 4.7 us, m is 0, and the length of the GP is the remaining length. Alternatively, the number n of the OFDM symbols is 12, the length of the long CP is 75 us, the length of the short CP is 4.7 us, m is 0, and the length of the GP is the remaining length. Alternatively, the number n of the OFDM symbols is 11, the length of the long CP is 100 us, the length of the short CP is 4.7 us, m is 0, and the length of the GP is the remaining length. Alternatively, the number n of the OFDM symbols is 9, the length of the long CP is 100 us (or 83.4 us or 116.7 us), the length of the short CP is 16.7 us, m is 0, and the length of the GP is the remaining length. Alternatively, the number n of the OFDM symbols is 21, the length of the long CP is 100 us, the length of the short CP is 4.7 us, m is 1, and the length of the GP is the remaining length. Alternatively, the number n of the OFDM symbols is 3, the length of the long CP is 16.7 us, the length of the short CP is 4.7 us, m is 0, and the length of the GP is the remaining length.

In this embodiment, a time domain position corresponding to the n OFDM symbols may be configured by a base station through signaling. For example, the time domain position may be obtained by configuring a period and an offset position.

In this embodiment, the value of n may be determined in one of following manners: predefinition, configuration through a base station, and determination according to a predefined parameter. The predefined parameter includes at least one of: a data transport block size, a data type, a system bandwidth, a coverage level corresponding to the data, a number of repetitions corresponding to the data, and subcarrier spacing.

The types of the data include, for example, control information, periodic service information, aperiodic service information, scheduling request information, link establishment information, and first transmission node capability information.

For an LTE system, n may be 6, 7, 12, 13, or 14. For a narrow band internet of things (NB-IoT) system, n may be 6, 7, 12, 13, or 14. For a new radio system, n may be 4, 6, 7, 8, 12, 13, 14 or 16. A plurality of the n OFDMs may be included in the time domain to constitute time domain resources for the data transmission.

In this embodiment, when the first transmission node transmits the data on the n OFDM symbols, a frequency domain bandwidth for transmitting the data may be determined in one of following manners: predefinition, configuration through a base station, and determination according to the predefined parameter. The predefined parameter includes at least one of: a data transport block size, a data type, a system bandwidth, a coverage level corresponding to the data, the number of repetitions corresponding to the data, and subcarrier spacing.

The frequency domain bandwidth for transmitting the data may be determined according to the data transport block size. For example, when the data transport block size is X1, the frequency domain bandwidth is Y1; and when the data transport block size is X2, the frequency domain bandwidth is Y2. Alternatively, the frequency domain bandwidth for transmitting the data may be determined according to the system bandwidth. For example, when the system bandwidth is less than X3, a full bandwidth is occupied in frequency domain; and when the system bandwidth is greater than X3, a configured bandwidth or a predefined bandwidth is occupied in frequency domain. Alternatively, when the data corresponds to an extreme coverage scenario, a single subcarrier is used in frequency domain; and when the data corresponds to a conventional coverage scenario, a plurality of subcarriers is used in frequency domain. For example, the plurality of subcarriers includes 12 subcarriers, 24 subcarriers, a single resource block or two resource blocks.

For the LTE system, the frequency domain bandwidth is 360 kHz. For the NB-IoT system, the frequency domain bandwidth is 180 kHz. For the new radio system, the frequency domain bandwidth is 720 kHz, 1440 kHz or 1800 kHz. The subcarrier spacing may be 3.75 kHz, 2.5 kHz, 15 kHz, 30 kHz, 60 kHz or 75 kHz.

In this embodiment, when each second CP has a length greater than a first threshold, the length of the first CP may be equal to the length of each second CP.

When each second CP has a length less than the first threshold, the length of the first CP may be greater than the length of each second CP.

In addition, when the first CP has a length less than a second threshold, the length of each second CP may be greater than 2 (3, or 4) times of the length of the first CP; and when the first CP has a length greater than the second threshold, the length of each second CP may be greater than 1.5 (or 1.25) times of the length of the first CP.

In this embodiment, in initial access to a network, the data may include at least one of: an identifier specific to and carried by the first transmission node, a connection establishment request message, and a service data packet; and in transmission of the data after the access to the network, the data may include at least one of: an identifier allocated by a second transmission node to the first transmission node, a service data packet, and a short security information packet allocated by the second transmission node.

In this embodiment, at least one of a retransmission manner of the data, a transmission manner of next new data and a feedback manner corresponding to the data may be determined at least according to a buffer scheduling request (BSR), a data type, a data transport block size, duration of the data, and a bandwidth of the data.

The determination of at least one of the retransmission manner of the data, the transmission manner of the next new data and the feedback manner corresponding to the data according to the BSR, the data type, the data transport block size, the duration of the data, and the bandwidth of the data may include at least one of:
a value S of the BSR greater than a threshold S1 corresponds to a following transmission manner: subsequent data is transmitted based on scheduling of the second transmission node; the value S of the BSR less than a threshold S2 corresponds to a following feedback manner: the second transmission node feeds back only at least one of an acknowledgement/non-acknowledgement (ACK/NACK) message and random identifier information, where the random identifier information is randomly generated by the second transmission node according to the identifier reported by the first transmission node, or is randomly generated by the first transmission node and carried in the data transmitted to the second transmission node;
a value A of the duration of the data greater than a threshold A1 corresponds to a following transmission manner: the subsequent data is transmitted based on the scheduling of the second transmission node;
the value A of the duration of the data less than a threshold A2 corresponds to a following feedback manner: the second transmission node feeds back only at least one of the ACK/NACK message and the random identifier information, wherein the random identifier information is randomly generated by the second transmission node according to the identifier reported by the first transmission node, or is randomly generated by the first transmission node and carried in the data transmitted to the second transmission node;
a value B of the bandwidth of the data greater than a threshold B1 corresponds to a following transmission manner: the subsequent data is transmitted based on the scheduling of the second transmission node;
the value B of the bandwidth of the data less than a threshold B2 corresponds to a following feedback manner: the second transmission node feeds back only at least one of the ACK/NACK message and the random identifier information, wherein the random identifier information is randomly generated by the second transmission node according to the identifier reported by the first transmission node, or is randomly generated by the first transmission node and carried in the data transmitted to the second transmission node;
the data type being a first type corresponds to a following transmission manner: the subsequent data is transmitted based on the scheduling of the second transmission node; and
the data type being a second type corresponds to a following feedback manner: the second transmission node feeds back only at least one of the ACK/NACK message and the random identifier information, wherein the random identifier information is randomly generated by the second transmission node according to the identifier reported by the first transmission node, or is randomly generated by the first transmission node and carried in the data transmitted to the second transmission node.

In this embodiment, the method may further include step 602 described below.

In step 602, the first transmission node determines whether to retransmit the data according to at least one of the ACK/NACK message and the random identifier information.

In this embodiment, the method may further include the following step.

When the first transmission node only obtains the NACK message, the first transmission node randomly selects a resource again to retransmit the data.

In this embodiment, the method may further include the following step.

When the first transmission node obtains a timing advance (TA), the first transmission node randomly selects a second resource from a second resource set to transmit retransmission data or new data, where the second resource set is a set of a plurality of the second resources configured by the base station for transmitting the data, the second resource is a basic unit for transmitting the data, a frequency domain bandwidth and a time domain length of the second resource are predefined. For example, in the LTE system, the second resource includes two physical resource blocks, or two physical resource blocks of four consecutive subframes; or in the NB-IoT system, the second resource includes two resource units (RUs), four RUs, or eight RUs. The second resource has a same structure (e.g., subcarrier spacing, length and position of CP) as a resource scheduled by the second transmission node for transmitting the data.

In this embodiment, timing adjustment is required in the transmission of the data.

In this embodiment, the method may further include the following step.

When the first transmission node obtains the TA and a UL grant or only the UL grant, the first transmission node transmits the retransmission data or the new data on a resource indicated by the UL grant.

In this embodiment, the method may further include the following step.

When the first transmission node obtains a random identifier consistent with a target random identifier (a random identifier generated according to a reported ID, or a report identifier included in the data), the first transmission node determines that the data is transmitted successfully; or when the first transmission node obtains a random identifier inconsistent with the target random identifier, the first transmission node randomly selects a resource again to retransmit the data.

In this embodiment, the first transmission node may determine a transmission manner according to at least one of configuration information, a predefined rule, and capability information of the first transmission node in a current system.

The predefined rule includes selection of the transmission manner by the first transmission node according to at least one of a size of transmission data or a size of the BSR, a time domain transmission unit corresponding to the transmission data, retransmission corresponding to the transmission data, and system-configured dedicated information.

In this embodiment, the data is transmitted in at least one of the following manners:
the first transmission node configures non-scheduled transmission according to the second transmission node, and retransmits the data or transmits the new data in a non-scheduled mode according to the ACK/NACK message fed back by the second transmission node;
the first transmission node configures the non-scheduled transmission according to the second transmission node, and retransmits the data or transmits the new data in the non-scheduled mode according to the ACK/NACK message and the TA fed back by the second transmission node, where the first transmission node performs adjustment according to the TA fed back by the second transmission node and retransmits the data or transmits the new data;
the first transmission node configures the non-scheduled transmission according to the second transmission node, and retransmits the data or transmits the new data based on the scheduling according to a UL grant and the TA fed back by the second transmission node; and
the first transmission node configures the non-scheduled transmission according to the second transmission node, and retransmits the data or transmits the new data according to the UL grant fed back by the second transmission node.

Examples are provided below.

In a manner 1, the data is transmitted through steps described below.

In step 1a, the base station is configured for non-scheduled transmission.

In step 1b, the terminal configures the non-scheduled transmission according to the base station. In step 1c, the base station feeds back the ACK/NACK message.

In step 1d, the terminal retransmits the data or transmits the new data in the non-scheduled mode according to the feedback of the base station.

In a manner 2, the data is transmitted through steps described below.

In step 2a, the base station is configured for non-scheduled transmission.

In step 2b, the terminal configures the non-scheduled transmission according to the base station. In step 2c, the base station feeds back the ACK/NACK message and the TA (in the first transmission, the TA is fed back; and in subsequent transmission, the TA is not fed back).

In step 2d, the terminal retransmits the data or transmits the new data in the non-scheduled mode according to the feedback (the ACK/NACK message and the TA) of the base station, where the first transmission node performs adjustment according to the received TA and retransmits the data or transmits the new data.

In a manner 3, the data is transmitted through steps described below.

In step 3a, the base station is configured for non-scheduled transmission.

In step 3b, the terminal configures the non-scheduled transmission according to the base station.

In step 3c, the base station feeds back the UL grant and the TA, or only feeds back the UL grant (in the first transmission, the TA is fed back; and in subsequent transmission, the TA is not fed back).

In step 3d, the terminal retransmits the data or transmits the new data based on the scheduling according to the feedback (the UL grant and the TA) of the base station.

In a manner 4, the data is transmitted through steps described below.

In step 4a, the base station is configured for non-scheduled transmission.

In step 4b, the terminal configures the non-scheduled transmission according to the base station. In step 4c, the base station feeds back the UL grant.

In step 4d, the terminal retransmits the data or transmits the new data according to the detected information (information fed back by the base station).

The above manners may be dynamically switched. For example, the manner 1 and the manner 3 may be combined to form a manner 5, and the manner 1 and the manner 4 may be combined to form a manner 6.

In the manner 5, the data is transmitted through steps described below.

In step 5a, the base station is configured for non-scheduled transmission.

In step 5b, the terminal configures the non-scheduled transmission according to the base station. In step 5c, the base station feeds back the information according to the step 1c or the step 3c.

In step 5d, the terminal retransmits the data or transmits the new data by adopting the step 1d or the step 3d correspondingly according to the feedback of the base station.

In the manner 6, the data is transmitted through steps described below.

In step 6a, the base station is configured for non-scheduled transmission.

In step 6b, the terminal configures the non-scheduled transmission according to the base station. In step 6c, the base station feeds back the information according to the step 1c or the step 4c.

In step 6d, the terminal retransmits the data or transmits the new data by adopting the step 1d or the step 4d correspondingly according to the feedback of the base station.

The manner of transmitting the data is selected from the non-scheduled transmission and the scheduled transmission according to the BSR, the data type, the data transport block size, the duration of the data, and the bandwidth of the data.

The combination of the non-scheduled transmission and the scheduled transmission can reduce the performance degradation caused by data collisions in the non-scheduled transmission. At the same time, the scheduled transmission can supplement and improve the reliability of the data transmission and improve the transmission efficiency. Different scheduling manners may be chosen for different scenarios, which can better implement the data transmission, reduce the transmission delay, and improve the transmission efficiency.

FIG. 7 is a structural diagram of a device for data transmission according to an embodiment of the present invention. As shown in FIG. 7, the device for data transmission includes a transmitting unit 71.

The transmitting unit 71 is configured to transmit data on n OFDM symbols. The data includes more than 1 bit, the data is encoded and then mapped onto the n OFDM symbols, and n is an integer greater than 1.

A first OFDM symbol of the n OFDM symbols is provided with a first CP, and OFDM symbols other than the first OFDM symbol of the n OFDM symbols are provided with respective second CPs. The length of the first CP is greater than or equal to the length of each second CP of the second CPs.

In this embodiment, the length of the first CP may be greater than time domain asynchronous offset of the first transmission node. The device for data transmission is disposed in the first transmission node.

In this embodiment, when the first OFDM symbol is provided with the first CP and the OFDM symbols other than the first OFDM symbol are provided with the second CPs, one or more CPs, except the first CP, may have one of following position relationships.

In a first position relationship, different types of CPs are spaced by the first CP.

In a second position relationship, different types of CPs are adjacent, the first CP is disposed on the first OFDM symbol, and the different types of second CPs are consecutive without interlacing.

In a third position relationship, different types of CPs are adjacent, the first CP is disposed on the first OFDM symbol, and the different types of second CPs interlace with each other.

In this embodiment, a GP may be further added after the n OFDM symbols.

In this embodiment, the total time domain length of the first CP, the second CPs, the n OFDM symbols and the GP may be 2^{m} ms, where the time domain length of the GP is greater than or equal to 0, and m is an integer.

In this embodiment, a time domain position corresponding to the n OFDM symbols may be configured by a base station through signaling.

In this embodiment, the value of n may be determined in one of following manners: predefinition, configuration through a base station, and determination according to a predefined parameter. The predefined parameter includes at least one of: a data transport block size, a data type, a system bandwidth, a coverage level corresponding to the data, a number of repetitions corresponding to the data, and subcarrier spacing.

In this embodiment, when the first transmission node transmits the data on the n OFDM symbols, a frequency domain bandwidth for transmitting the data may be determined in one of following manners: predefinition, configuration through a base station, and determination according to the predefined parameter. The predefined parameter includes at least one of: a data transport block size, a data type, a system bandwidth, a coverage level corresponding to the data, the number of repetitions corresponding to the data, and subcarrier spacing.

In this embodiment, when each second CP has a length greater than a first threshold, the length of the first CP may be equal to the length of each second CP.

When each second CP has a length less than the first threshold, the length of the first CP may be greater than the length of each second CP.

In this embodiment, in initial access to a network, the data may include at least one of: an identifier specific to and carried by the first transmission node, a connection establishment request message, and a service data packet; and in transmission of the data after the access to the network, the data may include at least one of: an identifier allocated by a second transmission node to the first transmission node, a service data packet, and a short security information packet allocated by the second transmission node.

In this embodiment, at least one of a retransmission manner of the data, a transmission manner of next new data and a feedback manner corresponding to the data may be determined at least according to a buffer scheduling request (BSR), a data type, a data transport block size, duration of the data, and a bandwidth of the data.

In this embodiment, the determination of at least one of the retransmission manner of the data, the transmission manner of the next new data and the feedback manner corresponding to the data according to the BSR, the data type, the data transport block size, the duration of the data, and the bandwidth of the data may include at least one of:
a value S of the BSR greater than a threshold S1 corresponds to a following transmission manner: subsequent data is transmitted based on scheduling of the second transmission node;
the value S of the BSR less than a threshold S2 corresponds to a following feedback manner: the second transmission node feeds back only at least one of an acknowledgement/non-acknowledgement (ACK/NACK) message and random identifier information, where the random identifier information is randomly generated by the second transmission node according to the identifier reported by the first transmission node, or is randomly generated by the first transmission node and carried in the data transmitted to the second transmission node;
a value A of the duration of the data greater than a threshold A1 corresponds to a following transmission manner: the subsequent data is transmitted based on the scheduling of the second transmission node;
the value A of the duration of the data less than a threshold A2 corresponds to a following feedback manner: the second transmission node feeds back only at least one of the ACK/NACK message and the random identifier information, wherein the random identifier information is randomly generated by the second transmission node according to the identifier reported by the first transmission node, or is randomly generated by the first transmission node and carried in the data transmitted to the second transmission node;
a value B of the bandwidth of the data greater than a threshold B1 corresponds to a following transmission manner: the subsequent data is transmitted based on the scheduling of the second transmission node;
the value B of the bandwidth of the data less than a threshold B2 corresponds to a following feedback manner: the second transmission node feeds back only at least one of the ACK/NACK message and the random identifier information, wherein the random identifier information is randomly generated by the second transmission node according to the identifier reported by the first transmission node, or is randomly generated by the first transmission node and carried in the data transmitted to the second transmission node;
the data type being a first type corresponds to a following transmission manner: the subsequent data is transmitted based on the scheduling of the second transmission node; and
the data type being a second type corresponds to a following feedback manner: the second transmission node feeds back only at least one of the ACK/NACK message and the random identifier information, wherein the random identifier information is randomly generated by the second transmission node according to the identifier reported by the first transmission node, or is randomly generated by the first transmission node and carried in the data transmitted to the second transmission node.

In this embodiment, the device may further include a processing unit 72.

The processing unit 72 is configured to determine whether to retransmit the data according to at least one of the ACK/NACK message and the random identifier information.

In this embodiment, the transmitting unit 71 may be further configured to, when the first transmission node only obtains the NACK message, randomly select a resource again to retransmit the data.

**In** this embodiment, the transmitting unit 71 may be further configured to, when the first transmission node obtains a TA, randomly select a second resource from a second resource set to transmit retransmission data or new data, where the second resource set is a set of a plurality of the second resources configured by the base station for transmitting the data, the second resource is a basic unit for transmitting the data, a frequency domain bandwidth and a time domain length of the second resource are predefined. The second resource has a same structure as a resource scheduled by the second transmission node for transmitting the data.

**In** this embodiment, the transmitting unit 71 may be further configured to, when the first transmission node obtains the TA and a UL grant or only the UL grant, transmit the retransmission data or the new data on a resource indicated by the UL grant.

**In** this embodiment, the processing unit 72 may be further configured to, when the first transmission node obtains a random identifier consistent with a target random identifier, determine that the data is transmitted successfully; or when the first transmission node obtains a random identifier inconsistent with the target random identifier, randomly select a resource again to retransmit the data.

**In** this embodiment, the data is transmitted in at least one of the following manners:
the first transmission node configures non-scheduled transmission according to the second transmission node, and retransmits the data or transmits the new data in a non-scheduled mode according to the ACK/NACK message fed back by the second transmission node;
the first transmission node configures the non-scheduled transmission according to the second transmission node, and retransmits the data or transmits the new data in the non-scheduled mode according to the ACK/NACK message and the TA fed back by the second transmission node, where the first transmission node performs adjustment according to the TA fed back by the second transmission node and retransmits the data or transmits the new data;
the first transmission node configures the non-scheduled transmission according to the second transmission node, and retransmits the data or transmits the new data based on the scheduling according to the UL grant and the TA fed back by the second transmission node; and
the first transmission node configures the non-scheduled transmission according to the second transmission node, and retransmits the data or transmits the new data according to the UL grant fed back by the second transmission node.

The second transmission node may be a terminal, a base station, a relay or other node devices.

The transmission includes sending and/or receiving. In an example, the terminal sends the data to the base station, and the base station receives the data from the terminal. The device may be disposed in the terminal or the base station. In another example, the base station sends the data to the terminal, and the terminal receives the data from the base station. The device may be disposed in the terminal or the base station. In another example, a first terminal sends the data to a second terminal, and the second terminal receives the data from the first terminal. The device may be disposed in the first terminal or the second terminal. In another example, the terminal sends the data to a relay, and the relay receives the data form the terminal. The device may be disposed in the terminal or the relay. In another example, the relay sends the data to the base station, and the base station receives the data from the relay. The device may be disposed in the base station or the relay. In another example, the relay sends the data to the terminal, and the terminal receives the data from the relay. The device may be disposed in the terminal or the relay. In another example, the base station sends the data to the relay, and the relay receives the data from the base station. The device may be disposed in the base station or the relay.

The length of the first CP may further be greater than 1.5, 2, 5, 10, 50, 100, or 500 times of the length of each second CP.

The relationship between the length of the first CP and the length of each second CP may be different for different cell radius.

In addition, with the constraint in which the overall length needs to be an integer, the length of the first CP and the length of each second CP may be adaptively expanded on the basis of the above limitation.

The first type of data may include an access request, a data transmission request, or a link establishment request.

The second type of data may include a non-access request, a non-data transmission request, or a non-link establishment request.

The thresholds S1, S2, A1, A2, B1 and B2 may be predefined, or may be configured by the second transmission node, or maybe broadcasted by the first transmission node.

The first transmission node may determine a transmission manner according to at least one of configuration information, a predefined rule, and capability information of the first transmission node in a current system.

The predefined rule may include selection of the transmission manner by the first transmission node according to at least one of a size of transmission data or a size of the BSR, a time domain transmission unit corresponding to the transmission data, retransmission corresponding to the transmission data, and system-configured dedicated information.

Examples are provided below.

### Scenario 1:

The system is configured with only the scheduled transmission manner. The first transmission node sends a scheduling request, and transmits the data after the scheduling. Alternatively, the first transmission node sends a random access channel, obtains the TA, and transits the data according to the scheduling and the TA.

### Scenario 2:

The system is configured with only the transmission manner. The first transmission node directly transmits the data in the manner described above.

### Scenario 3:

The system is configured with a non-scheduled transmission resource and a scheduled random access channel resource. The first transmission node selects the transmission manner according to the size of transmission data or the size of the BSR, and the capability information of the first transmission node.

In a case where the first transmission node supports the non-scheduled transmission manner, when the size of the data or the BSR is less than a threshold k1, the non-scheduled transmission manner is adopted, in which the first transmission node transmits the data; and when the size of the data or the BSR is greater than a threshold k2, other transmission manners may be adopted. For example, the first transmission node sends the scheduling request, and transmits the data after the scheduling; alternatively, the first transmission node sends the random access channel, obtains the TA and transmits the data according to the scheduling and the TA.

In a case where the first transmission node does not support the non-scheduling-based transmission manner, other transmission manners may be adopted. For example, the first transmission node sends the scheduling request, and transmits the data after the scheduling; alternatively, the first transmission node sends the random access channel, obtains the TA and transmits the data according to the scheduling and the TA.

### Scenario 4:

The system is configured with the non-scheduling-based transmission resource and the scheduling-based random access channel resource. The first transmission node selects the transmission manner according to the time domain transmission unit corresponding to the transmission data.

The time domain transmission unit may include a time domain length corresponding to an encoded transmission block. In an example, duration corresponding to conventional data is 1 ms and duration of special data transmission is 0.5 ms. Alternatively, the time domain transmission unit corresponds to a size of a time domain OFDM symbol. In an example, the size of the time domain OFDM symbol corresponding to the conventional data is 66.7 us, and the size of the time domain OFDM symbol corresponding to the special data is 33.375 us.

In a case where the first transmission node supports the non-scheduled transmission manner, when the time domain transmission unit corresponding to the data is less than a threshold t1 (for example, delay-sensitive services, or the time domain transmission unit is less than a conventional time domain transmission unit), the non-scheduled transmission manner is adopted, in which the first transmission node transmits the data in the manner described above; and when the time domain transmission unit corresponding to the data is greater than a threshold t2 (for example, delay-insensitive services, or the time domain transmission unit is the conventional time domain transmission unit), other transmission manners may be adopted. For example, the first transmission node sends the scheduling request, and transmits the data after the scheduling; alternatively, the first transmission node sends the random access channel, obtains the TA and transmits the data according to the scheduling and the TA.

In a case where the first transmission node does not support the non-scheduled transmission manner, other transmission manners may be adopted. For example, the first transmission node sends the scheduling request, and transmits the data after the scheduling. Alternatively, the first transmission node sends the random access channel, obtains the TA and transmits the data according to the scheduling and the TA.

### Scenario 5:

The system is configured with the non-scheduled transmission resource and the scheduled random access channel resource. The first transmission node selects the transmission manner according to the number of times of the retransmission corresponding to the transmission data.

The number of times of the retransmission mainly refers to the number of repeated data transmission for improving coverage in a coverage enhancement scenario. Different coverage levels may correspond to different numbers of times of the retransmission. Furthermore, retransmission in a non-coverage enhancement scenario is not excluded.

In a case where the first transmission node supports the non-scheduled transmission manner, when the number of times of the retransmission corresponding to the data is less than a threshold x1, the non-scheduled transmission manner is adopted, in which the first transmission node transmits the data; and when the number of times of the retransmission corresponding to the data is greater than a threshold x2, other transmission manners may be adopted. For example, the first transmission node sends the scheduling request, and transmits the data after the scheduling; alternatively, the first transmission node sends the random access channel, obtains the TA and transmits the data according to the scheduling and the TA.

In a case where the first transmission node does not support the non-scheduled transmission manner, other transmission manners may be adopted. For example, the first transmission node sends the scheduling request, and transmits the data after the scheduling. Alternatively the first transmission node sends the random access channel, obtains the TA and transmits the data according to the scheduling and the TA.

### Scenario 6:

The system is configured with the non-scheduled transmission resource and the scheduled random access channel resource. The first transmission node selects the transmission manner according to the system-configured dedicated information.

The system-configured dedicated information mainly refers to dedicated information of the first transmission node configured by the system after the first transmission node accesses the network. The dedicated information includes information for indicating whether the transmission node adopts the non-scheduled transmission manner (the transmission manner proposed by the present application). The system includes the second transmission node or a third transmission node. The third transmission node includes a node similar to the first transmission node or the second transmission node, or a transmission node at a higher level, such as a mobility management entity (MME), a specific server or a network element.

**In** a case where the first transmission node supports the non-scheduled transmission manner, when the first transmission node obtains the system-configured dedicated information, the first transmission node transmits the data in the manner described above in the system; and when the first transmission node fails to access the network or the first transmission node is handed over to other systems (for example, cell handover or system handover), other transmission manners may be adopted. For example, the first transmission node sends the scheduling request, and transmits the data after the scheduling; alternatively, the first transmission node sends the random access channel, obtains the TA and transmits the data according to the scheduling and the TA.

In a case where the first transmission node does not support the non-scheduled transmission manner, other transmission manners may be adopted. For example, the first transmission node sends the scheduling request, and transmits the data after the scheduling. Alternatively, the first transmission node sends the random access channel, obtains the TA and transmits the data according to the scheduling and the TA.

More than one of predefined rules in scenarios 3, 4, 5 and 6 may be used at the same time. For example, when more than one rules are satisfied, the non-scheduled transmission manner is adopted, in which the first transmission node transmits the data in the manner proposed in the present application; otherwise, other transmission manners may be adopted. For example, the first transmission node sends the scheduling request, and transmits the data after the scheduling; alternatively, the first transmission node sends the random access channel, obtains the TA and transmits the data according to the scheduling and the TA.

The method for data transmission provided by embodiments of the present invention will be detailed below in conjunction with application scenarios.

### Embodiment 1

The transmission of data in the LTE system is applied into an enhance machine type communication (eMTC) scenario.

The resource pool includes resources which are periodically configured. On one basic time domain unit, one or more frequency domain resources may exist for selection by a user. A plurality of periods may be available in the time domain, such as 5 ms, 10 ms, 20 ms, 40 ms and 160 ms. One or more time domain positions may exist in one period, for example three time domain positions within 20 ms, or three time domain positions within 40 ms. One or more frequency domain resources may exist on one time domain unit, such as 1, 2, or 4 frequency domain resources. The length of the time domain unit may be 1 ms, 2 ms, 4 ms or 8 ms. The frequency domain bandwidth may be 2, 3, 4, 6, or 8 physical resource blocks (PRBs).

### Application 1

The UE accesses the network by using a relevant LTE process. After configured by the base station in a connection state, the UE simultaneously detects downlink control information (DL grant and UL grant), and randomly selects a resource in the resource pool configured by the base station for uplink data transmission.

A subframe structure of the uplink data transmission is the same as a subframe structure in the LTE system.

The data type transmission includes at least one of the following:
the data includes an identifier (ID) allocated by the base station to the UE, the BSR, a security information packet and a connection request;
the data includes the ID allocated by the base station to the UE, the service data packet and the short security information packet allocated by the base station;
the data includes the ID allocated by the base station to the UE, and the service data packet; and
the data includes the ID allocated by the base station to the UE, the BSR, and the connection request.

The various types of data described above may further include a random ID of the UE. The number of bits of the random ID is less than the number of bits of the ID allocated by the base station. The random ID includes, for example, 2 bits, 3 bits or 4 bits.

It is to be noted that when there is a plurality of types of data, different data types may be selected according to different scenarios. For example, a data type 1 is selected in the initial access, a data type 2 is selected after the establishment of radio resource control (RRC), a data type 3 is selected in the connection state, a data type 4 is selected in an idle state, and a data type 5 is selected in a paging and wakeup scenario.

The base station receives the data, determines the UE corresponding to the data according to the ID carried in the data, sends the UL grant according to remaining traffic of the UE for instructing the UE to transmit the new data at a scheduling position after correctly performing the decoding, and implicitly notifies the UE that the base station has successfully performed the decoding; or only indicates through the UL grant that the UE has successfully sent the data. In another example, the base station feeds back the ACK/NACK message in a downlink feedback channel corresponding to the data, and the UE obtains the ACK/NACK message in the downlink feedback channel and determines whether to retransmit the data.

The timing adjustment information of the UE and the UL grant may be transmitted to the UE through a physical downlink control channel or a physical share channel; or the timing adjustment information of multiple pieces of UE may be transmitted in a downlink; or the timing adjustment information of the pieces of UE and the UL grant are transmitted in the downlink.

When the ACK/NACK message is transmitted, a conflict resolution ID may be further carried. The conflict resolution ID is randomly generated according to the UE ID, or may be a random ID in the data.

In an example, the conflict resolution ID has a value of 0, 1 or 2. The conflict resolution ID is fed back jointly with the ACK/NACK message through 2 bits.
00: the NACK message;
01: the ACK message and the conflict resolution ID equaling to 0;
10: the ACK message and the conflict resolution ID equaling to 1; and
11: the ACK message and the conflict resolution ID equaling to 2.

In another example, the conflict resolution ID has a value of 0 or 1. The conflict resolution ID is fed back jointly with the ACK/NACK message through 2 bits.
00: the NACK message;
01: the ACK message and the conflict resolution ID equaling to 0;
10: the ACK message and the conflict resolution ID equaling to 1; and
11: the ACK message (the pieces of UE with resource conflicts are correctly decoded).

In another example, the conflict resolution ID has a value of 0, 1, 2, 3, 4, 5 or 6. The conflict resolution ID is fed back jointly with the ACK/NACK message through 3 bits.
000: the NACK message;
001: the ACK message and the conflict resolution ID equaling to 0;
010: the ACK message and the conflict resolution ID equaling to 1;
011: the ACK message and the conflict resolution ID equaling to 2;
100: the ACK message and the conflict resolution ID equaling to 3;
101: the ACK message and the conflict resolution ID equaling to 4;
110: the ACK message and the conflict resolution ID equaling to 5; and
111: the ACK message and the conflict resolution ID equaling to 6.

In another example, the conflict resolution ID has a value of 0, 1, 2, 3, 4 or 5. The conflict resolution ID is fed back jointly with the ACK/NACK message through 3 bits.
000: the NACK message;
001: the ACK message and the conflict resolution ID equaling to 0;
010: the ACK message and the conflict resolution ID equaling to 1;
011: the ACK message and the conflict resolution ID equaling to 2;
100: the ACK message and the conflict resolution ID equaling to 3;
101: the ACK message and the conflict resolution ID equaling to 4;
110: the ACK message and the conflict resolution ID equaling to 5; and
111: the ACK message (the pieces of UE with resource conflicts are correctly decoded).

The UE determines, according to the feedback information, whether to retransmit the data and whether the conflict occurs. For example, when the feedback information detected by the UE is the ACK message, but the conflict resolution ID is different from the UE ID, the UE determines that the UE fails to correctly transmit the data and needs to retransmit the data.

The UE retransmits the data or transmits the new data according to the timing adjustment information.

The number of resource pools for transmitting the data may be one or more. For example, in a case of two resource pools, one is configured to transmit the data after receiving the timing adjustment information, and the other one is configured to transmit the data without the timing adjustment information.

The UE may select the resource pool depending on whether receives the timing adjustment information.

The base station may detect a plurality of resource pools in a blind detection manner.

### Application 2

The UE accesses the network, and selects a resource in the resource pool configured by the base station to perform uplink data transmission. After the first data uplink transmission, the UE may further, according to the scheduling of the base station, retransmit the data and transmit the new data.

The number of OFDM symbols in a data transmission subframe is less the number of OFDM symbols of a PUSCH transmission subframe in the LTE system. The length of a CP of a first OFDM symbol of the data transmission subframe is greater than the length of a CP of a first OFDM symbol of the PUSCH transmission subframe in the LTE system. Alternatively, the length of the CP of the first OFDM symbol of the data transmission subframe is greater than or equal to the length of a CP of a first OFDM symbol of a PRACH transmission subframe in the LTE system.

The data type transmission includes at least one of the following:
the data includes an ID generated by the UE, the BSR, the security information packet and the connection request;
the data includes the ID generated by the UE, the service data packet, and the short security information packet allocated by the base station;
the data includes the ID generated by the UE, and the service data packet; and
the data includes the ID generated by the UE, the BSR, and the connection request.

The base station detects the data in the blind detection manner, determines the UE corresponding to the data according to the ID carried in the data, sends the UL grant and the TA according to remaining traffic of the UE for instructing the UE to transmit the new data and the timing adjustment at the scheduling position after correctly performing the decoding, implicitly notifies the UE that the base station has successfully performed the decoding, and further allocates a user temporary ID for the scheduling and transmission of the sequent data; or only indicates through the UL grant that the UE has successfully sent the data. In another example, the base station feeds back the ACK/NACK message in the downlink feedback channel corresponding to the data, and the UE obtains the ACK/NACK message in the downlink feedback channel and determines whether to retransmit the data.

The timing adjustment information of the UE and the UL grant may be transmitted to the UE through the physical downlink control channel or the physical share channel; or the timing adjustment information of the multiple pieces of UE may be transmitted in a downlink; or the timing adjustment information of the multiple pieces of UE and the UL grant are transmitted in the downlink.

When the ACK/NACK message is transmitted, the conflict resolution ID may be further carried. The conflict resolution ID is randomly generated according to the UE ID, or may be the random ID in the data.

In an example, the conflict resolution ID has a value of 0, 1 or 2. The conflict resolution ID is fed back jointly with the ACK/NACK message through 2 bits.
00: the NACK message;
01: the ACK message and the conflict resolution ID equaling to 0;
10: the ACK message and the conflict resolution ID equaling to 1; and
11: the ACK message and the conflict resolution ID equaling to 2.

In another example, the conflict resolution ID has a value of 0 or 1. The conflict resolution ID is fed back jointly with the ACK/NACK message through 2 bits.
00: the NACK message;
01: the ACK message and the conflict resolution ID equaling to 0;
10: the ACK message and the conflict resolution ID equaling to 1; and
11: the ACK message (the pieces of UE with resource conflicts are correctly decoded).

In another example, the conflict resolution ID has a value of 0, 1, 2, 3, 4, 5 or 6. The conflict resolution ID is fed back jointly with the ACK/NACK message through 3 bits.
000: the NACK message;
001: the ACK message and the conflict resolution ID equaling to 0;
010: the ACK message and the conflict resolution ID equaling to 1;
011: the ACK message and the conflict resolution ID equaling to 2;
100: the ACK message and the conflict resolution ID equaling to 3;
101: the ACK message and the conflict resolution ID equaling to 4;
110: the ACK message and the conflict resolution ID equaling to 5; and
111: the ACK message and the conflict resolution ID equal to 6.

In another example, the conflict resolution ID has a value of 0, 1, 2, 3, 4 or 5. The conflict resolution ID is fed back jointly with the ACK/NACK message through 3 bits.
000: the NACK message;
001: the ACK message and the conflict resolution ID equaling to 0;
010: the ACK message and the conflict resolution ID equaling to 1;
011: the ACK message and the conflict resolution ID equaling to 2;
100: the ACK message and the conflict resolution ID equaling to 3;
101: the ACK message and the conflict resolution ID equaling to 4;
110: the ACK message and the conflict resolution ID equaling to 5;
111: the ACK message (the pieces of UE with resource conflicts are correctly decoded).

The UE retransmit the data or transmit the new data according to the timing adjustment information.

The number of resource pools for transmitting the data may be one or more. For example, in a case of two resource pools, one is configured to transmit the data after receiving the timing adjustment information, and the other one is configured to transmit the data without the timing adjustment information.

The UE may select the resource pool depending on whether receives the timing adjustment information.

The base station may adopt the blind detection manner.

### Embodiment 2

The data is transmitted in the NB-IoT system.

The resource pool includes resources which are periodically configured. On one basic time domain unit, one or more frequency domain resources may exist for selection by a user. The plurality of periods may be available in the time domain, such as 2 ms, 4 ms, 8 ms, 16 ms, 32 ms, 64 ms, 128 ms, 256 ms, 512 ms, 1024 ms and 4048 ms. One or more time domain positions may exist in one period, for example four time domain positions within 32 ms, or two time domain positions within 128 ms. One or more frequency domain resources may exist on one time domain unit, such as 1, 2, or 4 frequency domain resources. The length of the time domain unit may be 1 ms, 2 ms, 4 ms, 8 ms, 16 ms, 32 ms or 64 ms. The frequency domain bandwidth may be 1, 3, 6, or 12 tones.

### Application 1

The UE accesses the network by using the relevant LTE process. After configured by the base station in the connection state, the UE simultaneously detects downlink control information (DL grant and UL grant), and randomly selects a resource in the resource pool configured by the base station for uplink data transmission.

The subframe structure of the uplink data transmission is the same as the subframe structure in the LTE system.

The data type transmission includes at least one of the following:
the data includes the ID allocated by the base station to the UE, the BSR, the security information packet and the connection request;
the data includes the ID allocated by the base station to the UE, the service data packet, and the short security information packet allocated by the base station;
the data includes the ID allocated by the base station to the UE, and the service data packet; and
the data includes the ID allocated by the base station to the UE, the BSR, and the connection request.

The various types of data described above may further include the random ID of the UE. The number of bits of the random ID is less than the number of bits of the ID allocated by the base station. The random ID includes, for example, 2 bits, 3 bits or 4 bits.

It is to be noted that when there is plurality of types of data, different data types may be selected according to different scenarios. For example, the data type 1 is selected in the initial access, the data type 2 is selected after the establishment of RRC, the data type 3 is selected in the connection state, the data type 4 is selected in the idle state, and the data type 5 is selected in the paging and wakeup scenario.

The base station receives the data, determines the UE corresponding to the data according to the ID carried in the data, sends the UL grant according to remaining traffic of the UE for instructing the UE to transmit the new data at the scheduling position after correctly performing the decoding, and implicitly notifies the UE that the base station has successfully performed the decoding; or only indicates through the UL grant that the UE has successfully sent the data. In another example, the base station feeds back the ACK/NACK message in the downlink feedback channel corresponding to the data, and the UE obtains the ACK/NACK message in the downlink feedback channel and determines whether to retransmit the data.

The timing adjustment information of the UE and the UL grant may be transmitted to the UE through the physical downlink control channel or the physical share channel; or the timing adjustment information of multiple pieces of UE may be transmitted in a downlink; or the timing adjustment information of the pieces of UE and the UL grant are transmitted in the downlink.

When the ACK/NACK message is transmitted, the conflict resolution ID may be further carried. The conflict resolution ID is randomly generated according to the UE ID, or may be the random ID in the data.

In an example, the conflict resolution ID has a value of 0, 1 or 2. The conflict resolution ID is fed back jointly with the ACK/NACK message through 2 bits.
00: the NACK message;
01: the ACK message and the conflict resolution ID equaling to 0;
10: the ACK message and the conflict resolution ID equaling to 1; and
11: the ACK message and the conflict resolution ID equaling to 2.

In another example, the conflict resolution ID has a value of 0 or 1. The conflict resolution ID is fed back jointly with the ACK/NACK message through 2 bits.
00: the NACK message;
01: the ACK message and the conflict resolution ID equaling to 0;
10: the ACK message and the conflict resolution ID equaling to 1; and
11: the ACK message (the pieces of UE with resource conflicts are correctly decoded).

In another example, the conflict resolution ID has a value of 0, 1, 2, 3, 4, 5 or 6. The conflict resolution ID is fed back jointly with the ACK/NACK message through 3 bits.
000: the NACK message;
001: the ACK message and the conflict resolution ID equaling to 0;
010: the ACK message and the conflict resolution ID equaling to 1;
011: the ACK message and the conflict resolution ID equaling to 2;
100: the ACK message and the conflict resolution ID equaling to 3;
101: the ACK message and the conflict resolution ID equaling to 4;
110: the ACK message and the conflict resolution ID equaling to 5; and
111: the ACK message and the conflict resolution ID equaling to 6.

In another example, the conflict resolution ID has a value of 0, 1, 2, 3, 4 or 5. The conflict resolution ID is fed back jointly with the ACK/NACK message through 3 bits.
000: the NACK message;
001: the ACK message and the conflict resolution ID equaling to 0;
010: the ACK message and the conflict resolution ID equaling to 1;
011: the ACK message and the conflict resolution ID equaling to 2;
100: the ACK message and the conflict resolution ID equaling to 3;
101: the ACK message and the conflict resolution ID equaling to 4;
110: the ACK message and the conflict resolution ID equaling to 5;
111: the ACK message (the pieces of UE with resource conflicts are correctly decoded).

The UE determines, according to the feedback information, whether to retransmit the data and whether the conflict occurs. For example, when the feedback information detected by the UE is the ACK message, but the conflict resolution ID is different from the UE ID, the UE determines that the UE fails to correctly transmit the data and needs to retransmit the data.

The UE retransmit the data or transmit the new data according to the timing adjustment information.

The number of resource pools for transmitting the data may be one or may be more than one. For example, the number of resource pools is two, where one is configured to transmit the data after receiving the timing adjustment information, and the other one is configured to transmit the data without the timing adjustment information.

The UE may select the resource pool depending on whether receives the timing adjustment information.

The base station may detect a plurality of resource pools in the blind detection manner.

### Application 2

The UE accesses the network, and selects a resource in the resource pool configured by the base station to perform uplink data transmission. After the first data uplink transmission, the UE may further, according to the scheduling of the base station, retransmit the data and transmit the new data.

The number of OFDM symbols in the data transmission subframe is less the number of OFDM symbols of the PUSCH transmission subframe in the LTE system. The length of the CP of the first OFDM symbol of the data transmission subframe is greater than the length of the CP of the first OFDM symbol of the PUSCH transmission subframe in the LTE system. Alternatively, the length of the CP of the first OFDM symbol of the data transmission subframe is greater than or equal to the length of the CP of the first OFDM symbol of the PRACH transmission subframe in the LTE system.

The data type transmission includes at least one of the following:
the data includes the ID generated by the UE, the BSR, the security information packet and the connection request;
the data includes the ID generated by the UE, the service data packet, and the short security information packet allocated by the base station;
the data includes the ID generated by the UE, and the service data packet; and
the data includes the ID generated by the UE, the BSR, and the connection request.

The base station detects the data in the blind detection manner, determines the UE corresponding to the data according to the ID carried in the data, sends the UL grant and the TA according to remaining traffic of the UE for instructing the UE to transmit the new data and the timing adjustment at the scheduling position after correctly performing the decoding, implicitly notifies the UE that the base station has successfully performed the decoding, and further allocates the user temporary ID for the scheduling and transmission of the sequent data; or only indicates through the UL grant that the UE has successfully sent the data. In another example, the base station feeds back the ACK/NACK message in the downlink feedback channel corresponding to the data, and the UE obtains the ACK/NACK message in the downlink feedback channel and determines whether to retransmit the data.

The timing adjustment information of the UE and the UL grant may be transmitted to the UE through the physical downlink control channel or the physical share channel; or the timing adjustment information of the multiple pieces of UE may be transmitted in a downlink; or the timing adjustment information of the multiple pieces of UE and the UL grant are transmitted in the downlink.

When the ACK/NACK message is transmitted, the conflict resolution ID may be further carried. The conflict resolution ID is randomly generated according to the UE ID, or may be the random ID in the data.

In an example, the conflict resolution ID has a value of 0, 1 or 2. The conflict resolution ID is fed back jointly with the ACK/NACK message through 2 bits.
00: the NACK message;
01: the ACK message and the conflict resolution ID equaling to 0;
10: the ACK message and the conflict resolution ID equaling to 1; and
11: the ACK message and the conflict resolution ID equaling to 2.

In another example, the conflict resolution ID has a value of 0 or 1. The conflict resolution ID is fed back jointly with the ACK/NACK message through 2 bits.
00: the NACK message;
01: the ACK message and the conflict resolution ID equaling to 0;
10: the ACK message and the conflict resolution ID equaling to 1; and
11: the ACK message (the pieces of UE with resource conflicts are correctly decoded).

In another example, the conflict resolution ID is 0, 1, 2, 3, 4, 5 or 6. The conflict resolution ID is fed back jointly with the ACK/NACK message through 3 bits.
000: the NACK message;
001: the ACK message and the conflict resolution ID equaling to 0;
010: the ACK message and the conflict resolution ID equaling to 1;
011: the ACK message and the conflict resolution ID equaling to 2;
100: the ACK message and the conflict resolution ID equaling to 3;
101: the ACK message and the conflict resolution ID equaling to 4;
110: the ACK message and the conflict resolution ID equaling to 5; and
111: the ACK message and the conflict resolution ID equaling to 6.

In another example, the conflict resolution ID is 0, 1, 2, 3, 4 or 5. The conflict resolution ID is fed back jointly with the ACK/NACK message through 3 bits.
000: the NACK message;
001: the ACK message and the conflict resolution ID equaling to 0;
010: the ACK message and the conflict resolution ID equaling to 1;
011: the ACK message and the conflict resolution ID equaling to 2;
100: the ACK message and the conflict resolution ID equaling to 3;
101: the ACK message and the conflict resolution ID equaling to 4;
110: the ACK message and the conflict resolution ID equaling to 5; and
111: the ACK message (the pieces of UE with resource conflicts are correctly decoded).

The UE retransmit the data or transmit the new data according to the timing adjustment information.

The number of resource pools for transmitting the data may be one or more. For example, in a case of two resource pools, one is configured to transmit the data after receiving the timing adjustment information, and the other one is configured to transmit the data without the timing adjustment information.

The UE may select the resource pool depending on whether receives the timing adjustment information.

The base station may adopt the blind detection manner.

### Embodiment 3

The data is transmitted in a 5G system (a new system).

The resource pool includes resources with are periodically configured. On one basic time domain unit, one or more frequency domain resources may exist for selection by a user. The plurality of periods may be available in the time domain, such as 2 ms, 4 ms, 8 ms, 16 ms, 32 ms, 64 ms, 128 ms, 256 ms, 512 ms, 1024 ms, and 4048 ms; or 1 ms, 2 ms, 5 ms, 10 ms, 20 ms, 40 ms, 80 ms, 160 ms, 320 ms and 640 ms, or 0.1 ms, 0.125 ms, 0.25 ms, 0.5 ms and 1 ms. One or more time domain positions may exist in one period, for example two time domain positions within 5 ms, or three time domain positions within 20 ms. One or more frequency domain resources may exist on one time domain unit, such as 1, 2, or 4 frequency domain resources. The length of the time domain unit may be 1 ms, 2 ms, 4 ms, 16ms, 32 ms or 64 ms. The frequency domain bandwidth may be 1, 3, 6, or 12 tones, or two PRBs, or four PRBs, or six PRBs, or ten PRBs, or twelve PRBs.

The subcarrier spacing may be 1.25 kHz, 2.5 kHz, 3.75 kHz, 7.5 kHz, 15 kHz, 30 kHz, 60 kHz, 75 kHz, 90 kHz, 120 kHz or 150 kHz.

### Application 1

The UE performs uplink synchronization with the base station, accesses the network and is configured by the base station. The UE may detect the downlink control information, and may also randomly select a resource in the resource pool configured by the base station for uplink data transmission.

The subframe structure of the uplink data transmission adopts a subframe structure of an uplink synchronous scenario in the 5G system.

The data type transmission includes at least one of the following:
the data includes the ID allocated by the base station to the UE, the BSR, the security information packet and the connection request;
the data includes the ID allocated by the base station to the UE, the service data packet and the short security information packet allocated by the base station;
the data includes the ID allocated by the base station to the UE, and the service data packet; and
the data includes the ID allocated by the base station to the UE, the BSR, and the connection request.

The various types of data described above may further include the random ID of the UE. The number of bits of the random ID is less than the number of bits of the ID allocated by the base station. The random ID includes, for example 2 bits, 3 bits or 4 bits.

It is to be noted that when there is the plurality of types of data, different data types may be selected according to different scenarios. For example, the data type 1 is selected in the initial access, the data type 2 is selected after the establishment of RRC, the data type 3 is selected in the connection state, the data type 4 is selected in the idle state, and the data type 5 is selected in the paging and wakeup scenario.

The base station receives the data, determines the UE corresponding to the data according to the ID carried in the data, sends the UL grant according to remaining traffic of the UE for instructing the UE to transmit the new data at the scheduling position after correctly performing the decoding, and implicitly notifies the UE that the base station has successfully performed the decoding; or only indicates through the UL grant that the UE has successfully sent the data. In another example, the base station feeds back the ACK/NACK message in the downlink feedback channel corresponding to the data, and the UE obtains the ACK/NACK message in the downlink feedback channel and determines whether to retransmit the data.

The timing adjustment information of the UE and the UL grant may be transmitted to the UE through the physical downlink control channel or the physical share channel; or the timing adjustment information of the multiple pieces of UE may be transmitted in a downlink; or the timing adjustment information of the pieces of UE and the UL grant are transmitted in the downlink.

When the ACK/NACK message is transmitted, the conflict resolution ID may be further carried. The conflict resolution ID is randomly generated according to the UE ID, or may be the random ID in the data.

In an example, the conflict resolution ID has a value of 0, 1 or 2. The conflict resolution ID is fed back jointly with the ACK/NACK message through 2 bits.
00: the NACK message;
01: the ACK message and the conflict resolution ID equaling to 0;
10: the ACK message and the conflict resolution ID equaling to 1; and
11: the ACK message and the conflict resolution ID equaling to 2.

In another example, the conflict resolution ID has a value of 0 or 1. The conflict resolution ID is fed back jointly with the ACK/NACK message through 2 bits.
00: the NACK message;
01: the ACK message and the conflict resolution ID equaling to 0;
10: the ACK message and the conflict resolution ID equaling to 1; and
11: the ACK message (the pieces of UE with resource conflicts are correctly decoded).

In another example, the conflict resolution ID is 0, 1, 2, 3, 4, 5 or 6. The conflict resolution ID is fed back jointly with the ACK/NACK message through 3 bits.
000: the NACK message;
001: the ACK message and the conflict resolution ID equaling to 0;
010: the ACK message and the conflict resolution ID equaling to 1;
011: the ACK message and the conflict resolution ID equaling to 2;
100: the ACK message and the conflict resolution ID equaling to 3;
101: the ACK message and the conflict resolution ID equaling to 4;
110: the ACK message and the conflict resolution ID equaling to 5; and
111: the ACK message and the conflict resolution ID equaling to 6.

In another example, the conflict resolution ID has a value of 0, 1, 2, 3, 4 or 5. The conflict resolution ID is fed back jointly with the ACK/NACK message through 3 bits.
000: the NACK message;
001: the ACK message and the conflict resolution ID equaling to 0;
010: the ACK message and the conflict resolution ID equaling to 1;
011: the ACK message and the conflict resolution ID equaling to 2;
100: the ACK message and the conflict resolution ID equaling to 3;
101: the ACK message and the conflict resolution ID equaling to 4;
110: the ACK message and the conflict resolution ID equaling to 5; and
111: the ACK message (the pieces of UE with resource conflicts are correctly decoded).

The UE determines, according to the feedback information, whether to retransmit the data and whether the conflict occurs. For example, when the feedback information detected by the UE is the ACK message, but the conflict resolution ID is different from the UE ID, the UE determines that the UE fails to correctly transmit the data and needs to retransmit the data.

The UE retransmit the data or transmit the new data according to the timing adjustment information.

The number of resource pools for transmitting the data may be one or more. For example, in a case of two resource pools, one is configured to transmit the data after receiving the timing adjustment information, and the other one is configured to transmit the data without the timing adjustment information.

The UE may select the resource pool depending on whether receives the timing adjustment information.

The base station may detect the plurality of resource pools in the blind detection manner.

### Application 2

The UE accesses the network, and selects a resource in the resource pool configured by the base station to perform uplink data transmission. After the first data uplink transmission, the UE may further, according to the scheduling of the base station, retransmit the data and transmit the new data.

The number of OFDM symbols in the data transmission subframe is less the number of OFDM symbols for transmitting the data of the subframe (a subframe type 1) in the uplink asynchronous scenario of the 5G system. The length of the CP of the first OFDM symbol of the data transmission subframe (a subframe type 2) is greater than the length of a CP of a first OFDM symbol of the subframe (the subframe type 1) in the uplink asynchronous scenario of the 5G system. Alternatively, the length of the CP of the first OFDM symbol of the data transmission subframe (the subframe type 2) is greater than or equal to the length of a CP of a first OFDM symbol of a subframe (a subframe type 3) on an uplink synchronization channel of the 5G system.

The data type transmission includes at least one of the following:
the data includes the ID generated by the UE, the BSR, the security information packet and the connection request;
the data includes the ID generated by the UE, the service data packet, and the short security information packet allocated by the base station;
the data includes the ID generated by the UE, and the service data packet; and
the data includes the ID generated by the UE, the BSR, and the connection request.

The base station detects the data in the blind detection manner, determines the UE corresponding to the data according to the ID carried in the data, sends the UL grant and the TA according to remaining traffic of the UE for instructing the UE to transmit the new data and the timing adjustment at the scheduling position after correctly performing the decoding, implicitly notifies the UE that the base station has successfully performed the decoding, and further allocates the user temporary ID for the scheduling and transmission of the sequent data; or only indicates through the UL grant that the UE has successfully sent the data. In another example, the base station feeds back the ACK/NACK message in the downlink feedback channel corresponding to the data, and the UE obtains the ACK/NACK message in the downlink feedback channel and determines whether to retransmit the data.

The timing adjustment information of the UE and the UL grant may be transmitted to the UE through the physical downlink control channel or the physical share channel; or the timing adjustment information of the multiple pieces of UE are transmitted in a downlink; or the timing adjustment information of the multiple pieces of UE and the UL grant are transmitted in the downlink.

When the ACK/NACK message is transmitted, the conflict resolution ID may be further carried. The conflict resolution ID is randomly generated according to the UE ID, or may be the random ID in the data.

In an example, the conflict resolution ID has a value of 0, 1 or 2. The conflict resolution ID is fed back jointly with the ACK/NACK message through 2 bits.
00: the NACK message;
01: the ACK message and the conflict resolution ID equaling to 0;
10: the ACK message and the conflict resolution ID equaling to 1; and
11: the ACK message and the conflict resolution ID equaling to 2.

In another example, the conflict resolution ID is 0 or 1. The conflict resolution ID is fed back jointly with the ACK/NACK message through 2 bits.
00: the NACK message;
01: the ACK message and the conflict resolution ID equaling to 0;
10: the ACK message and the conflict resolution ID equaling to 1; and
11: the ACK message (the pieces of UE with resource conflicts are correctly decoded).

In another example, the conflict resolution ID is 0, 1, 2, 3, 4, 5 or 6. The conflict resolution ID is fed back jointly with the ACK/NACK message through 3 bits.
000: the NACK message;
001: the ACK message and the conflict resolution ID equaling to 0;
010: the ACK message and the conflict resolution ID equaling to 1;
011: the ACK message and the conflict resolution ID equaling to 2;
100: the ACK message and the conflict resolution ID equaling to 3;
101: the ACK message and the conflict resolution ID equaling to 4;
110: the ACK message and the conflict resolution ID equaling to 5; and
111: the ACK message and the conflict resolution ID equaling to 6.

In another example, the conflict resolution ID is 0, 1, 2, 3, 4 or 5. The conflict resolution ID is fed back jointly with the ACK/NACK message through 3 bits.
000: the NACK message;
001: the ACK message and the conflict resolution ID equaling to 0;
010: the ACK message and the conflict resolution ID equaling to 1;
011: the ACK message and the conflict resolution ID equaling to 2;
100: the ACK message and the conflict resolution ID equaling to 3;
101: the ACK message and the conflict resolution ID equaling to 4;
110: the ACK message and the conflict resolution ID equaling to 5; and
111: the ACK message (the pieces of UE with resource conflicts are correctly decoded).

The UE retransmit the data or transmit the new data according to the timing adjustment information.

The number of resource pools for transmitting the data may be one or more. For example, in a case of two resource pools, one is configured to transmit the data after receiving the timing adjustment information, and the other one is configured to transmit the data without the timing adjustment information.

The UE may select the resource pool depending on whether receives the timing adjustment information.

The base station may adopt the blind detection manner.

In addition, an embodiment of the present application further provides a computer-readable medium, which is configured to store data transmission programs which, when executed by a processor, implement the steps of the method for data transmission described above.

It is to be understood by those skilled in the art that the embodiments of the present invention may be provided as methods, systems or computer program products. Therefore, the embodiments of the present invention may be implemented by hardware, software, or a combination of hardware and software. In addition, the present invention may take the form of a computer program product implemented on one or more computer-usable storage media (including, but not limited to, a disk memory and an optical memory) that includes computer-usable program codes.

The present invention is described with reference to flowcharts and/or block diagrams of methods, devices (systems) and computer program products according to the embodiments of the present invention. It is to be understood that each flow and/or block in the flowcharts and/or block diagrams and a combination of flows and/or blocks in the flowcharts and/or block diagrams are implemented by computer program instructions. These computer program instructions can be provided to a general-purpose computer, a special-purpose computer, an embedded processor or a processor of other programmable data processing apparatus to produce a machine so that instructions executed by a computer or a processor of another programmable data processing apparatus produce a means for implementing the functions specified in one or more flows in the flowcharts and/or one or more blocks in the block diagrams.

These computer program instructions can also be stored in a computer-readable memory which can direct a computer or other programmable data processing devices to operate in a particular manner so that the instructions stored in the computer-readable memory produce a manufactured product including an instruction apparatus. The instruction apparatus implements the functions specified in one or more flows in the flowcharts and/or one or more blocks in the block diagrams.

These computer program instructions can also be loaded onto a computer or other programmable data processing devices so that a series of operation steps are performed on the computer or other programmable devices to produce processing implemented by a computer. Therefore, instructions executed on a computer or other programmable devices provide steps for implementing the functions specified in one or more flows in the flowcharts and/or one or more blocks in the block diagrams.

It will be understood by those skilled in the art that functional modules/units in all or part of the steps of the method, the system and the device disclosed above may be implemented as software, firmware, hardware and appropriate combinations thereof. In the hardware implementation, the division of functional modules/units mentioned in the above description may not correspond to the division of physical components. For example, one physical component may have several functions, or one function or step may be executed jointly by several physical components. Some or all components may be implemented as software executed by processors such as digital signal processors or microcontrollers, hardware, or integrated circuits such as application specific integrated circuits. Such software may be distributed on a computer-readable medium, which may include a computer storage medium (or a non-transitory medium) and a communication medium (or a transitory medium). As is known to those skilled in the art, the term, computer storage medium, includes volatile and nonvolatile, removable and non-removable medium implemented in any method or technology for storing information (such as computer-readable instructions, data structures, program modules or other data). The computer storage medium includes, but is not limited to, a RAM, a ROM, an EEPROM, a flash memory or other memory technologies, a CD-ROM, a digital versatile disc (DVD) or other optical disc storage, a magnetic cassette, a magnetic tape, a magnetic disk storage or other magnetic storage devices, or any other medium used for storing desired information and accessed by a computer. In addition, as is known to those skilled in the art, the communication medium generally includes computer-readable instructions, data structures, program modules or other data in modulated data signals such as carriers or other transmission mechanisms, and may include any information delivery medium.

The above are only preferred embodiments of the present disclosure and are not intended to limit the scope of the present disclosure.

### INDUSTRIAL APPLICABILITY

Embodiments of the present application provide a method and device for data transmission. The method and device for data transmission may transmit the data more quickly, reduce delay, and increase usage efficiency of system resources, and at the same time, minimize the impact on data transmission of other users in an asynchronous scenario.

## Claims

1. A method for data transmission, comprising:
receiving, by a first transmission node, non-scheduled transmission configuration of a second transmission node;
transmitting, by the first transmission node, data on a non-scheduled transmission resource according to the non-scheduled transmission configuration of the second transmission node;
receiving, by the first transmission node, feedback information of the second transmission node, wherein the feedback information comprises at least one of an acknowledgement/non-acknowledgement, ACK/NACK, message, a UL grant, random identifier information or a timing advance, TA; and
transmitting, by the first transmission node, data according the feedback information.

2. The method for data transmission according to claim 1, wherein
in initial access to a network, the data comprises at least one of: an identifier specific to and carried by the first transmission node, a connection establishment request message, and a service data packet; or
in transmission of the data after the access to the network, the data comprises at least one of: an identifier allocated by the second transmission node to the first transmission node, a service data packet, and a short security information packet.

3. The method for data transmission according to claim 1, wherein the random identifier information is randomly generated by the second transmission node according to an identifier reported by the first transmission node, or is randomly generated by the first transmission node and carried in the data transmitted to the second transmission node.

4. The method for data transmission according to claim 1, wherein the feedback information comprises the ACK/NACK message or the feedback information comprises the ACK/NACK message and the TA and the transmitting, by the first transmission node, the data according the feedback information comprises:
retransmitting, by the first transmission node, the data or transmitting new data in a non-scheduled mode on the non-scheduled transmission resource according to the feedback information.

5. The method for data transmission according to claim 1, wherein the feedback information comprises the UL Grant and the TA or the feedback information comprises the UL Grant and the transmitting, by the first transmission node, the data according the feedback information comprises:
retransmitting, by the first transmission node, the data or transmitting new data according to the feedback information.

6. The method for data transmission according to claim 1, wherein the feedback information comprises the TA and the transmitting, by the first transmission node, the data according the feedback information comprises:
randomly selecting, by the first transmission node, a second resource from a second resource set to transmit retransmission data or new data, wherein the second resource set is resources used for data transmission when only the TA is obtained.

7. The method for data transmission according to claim 1, wherein a retransmission manner of the data, a transmission manner of next new data and a feedback manner corresponding to the data is determined at least according to a buffer scheduling request, BSR, a data type, a data transport block size, duration of the data, and a bandwidth of the data.

8. The method for data transmission according to claim 7, wherein the determination of the retransmission manner of the data, the transmission manner of the next new data and the feedback manner corresponding to the data according to the BSR, the data type, the data transport block size, the duration of the data, and the bandwidth of the data comprises at least one of:
a value S of the BSR greater than a threshold S1 corresponds to a following transmission manner: subsequent data is transmitted based on scheduling of a second transmission node;
the value S of the BSR less than a threshold S2 corresponds to a following feedback manner: the second transmission node feeds back only at least one of the ACK/NACK message and random identifier information, wherein the random identifier information is randomly generated by the second transmission node according to the identifier reported by the first transmission node, or is randomly generated by the first transmission node and carried in the data transmitted to the second transmission node;
a value A of the duration of the data greater than a threshold A1 corresponds to a following transmission manner: the subsequent data is transmitted based on the scheduling of the second transmission node;
the value A of the duration of the data less than a threshold A2 corresponds to a following feedback manner: the second transmission node feeds back only at least one of the ACK/NACK message and the random identifier information, wherein the random identifier information is randomly generated by the second transmission node according to the identifier reported by the first transmission node, or is randomly generated by the first transmission node and carried in the data transmitted to the second transmission node;
a value B of the bandwidth of the data greater than a threshold B1 corresponds to a following transmission manner: the subsequent data is transmitted based on the scheduling of the second transmission node;
the value B of the bandwidth of the data less than a threshold B2 corresponds a following feedback manner: the second transmission node feeds back only at least one of the ACK/NACK message or the random identifier information, wherein the random identifier information is randomly generated by the second transmission node according to the identifier reported by the first transmission node, or is randomly generated by the first transmission node and carried in the data transmitted to the second transmission node;
the data type being a first type corresponds to a following transmission manner: the subsequent data is transmitted based on the scheduling of the second transmission node; and the data type being a second type corresponds to a following feedback manner: the second transmission node feeds back only at least one of the ACK/NACK message or the random identifier information, wherein the random identifier information is randomly generated by the second transmission node according to the identifier reported by the first transmission node, or is randomly generated by the first transmission node and carried in the data transmitted to the second transmission node.

9. A method for data receiving, comprising:
sending, by a second transmission node, non-scheduled transmission configuration of a first transmission node;
receiving, by the second transmission node, data on a non-scheduled transmission resource according to the non-scheduled transmission configuration of the first transmission node;
transmitting, by the second transmission node, feedback information of the first transmission node, wherein the feedback information comprises at least one of an acknowledgement/non-acknowledgement, ACK/NACK, message, a UL grant, random identifier information or a timing advance, TA; and
receiving, by the second transmission node, data according the feedback information.
